# EUROPEAN PATENT APPLICATION

(11) **EP 3 974 045 A1**
(43) Date of publication of application: **30.03.2022**
(21) Application number: 21199631.9
(22) Date of filing: 28.09.2021
(51) Int. Cl.: B01D 39/04, B01D 39/08, B01D 39/20, B01D 39/16, B01D 46/00, B01D 53/04

(54) **ELEMENT FOR AIR PURIFICATION**

(30) Priority: 29.09.2020 IT 202000022939
(71) Applicant: Clustervibe Oü, 74626 Pudisoo Kula (EE)
(72) Inventor: CAPODICASA, Alessandro, 96100 Siracusa (IT)
(74) Representative: Braidotti, Andrea

(57) **Abstract**

Element (1) for air purification, in particular to be used in an air conditioning, ventilation and/or, in general, air treatment apparatus or system, characterized by the fact that it comprises a layer (2) and/or structure comprising nano-particles (4) comprising at least one nano-cluster, preferably an agglomerate of nano-clusters, of carbon-based material having a face-centered cubic-type structure *(fcc).*

## Description

The present invention relates to an element for air purification, in particular to be used in an air conditioning, ventilation and/or, in general, air treatment apparatus or system.

As is known, the air filter is a device suitable for purifying the air of suspended solid particles, such as dust, and is used where it is necessary to have an air flow free from impurities.

Various types of air filters are known, in particular in terms of shape and materials, which are suitably chosen on the basis of the context of installation and use.

In particular, among the various applications, the air filter is used in the air conditioning system, both of a building and of a vehicle, to filter the external or internal air circulating in the ducts of the system itself.

Currently, various techniques are also known for removing chemical and/or bio-organic contaminants present in the air. For example, these techniques are based on chemical-physical processes (such as adsorption, flocculation and chlorination) or chemical (such as photocatalytic), or involve the use of absorbent materials (such as silica, hybrid airgel, zeolites, alumina and activated carbons) .

US 10 757 988 discloses a compound based on carbon nanotubes to be used in combination with surfactants and/or antiviral metals, or other medicines in order to limit the proliferation of microorganisms such as viruses, bacteria, molds or other biological agents. This compound can be used to treat personal protective equipment.

US 2013/0137324 discloses a fabric coated with a nanotube-based compound for the purpose of modifying the optical properties of the fabric itself and a method for making said fabric.

KR 2013 0011193 describes a non-woven fabric coated with carbon nanotubes, and a method for making this fabric to be used for air filtration.

However, known absorbent processes and materials generally exhibit limited absorption capacity or inefficient desorption. Furthermore, most of the known materials intended for air treatment cannot be recycled or reused.

The object of the invention is to propose an element for air purification, in particular to be used in an air conditioning, ventilation and/or air treatment apparatus or system, which at least partially overcomes the aforementioned drawbacks present in traditional solutions.

Another object of the invention is to propose an element for air purification which has a high filtering efficiency to particulates, bacteria and/or other contaminants and pathogens present in the air.

Another object of the invention is to propose an element for air purification which has a high filtering efficiency and also with bacteriostatic, bactericidal and/or antimicrobial properties.

Another object of the invention is to propose an element for air purification which is highly eco-compatible.

Another object of the invention is to propose an element for air purification which is simple, convenient and quick to install and uninstall, thus allowing to speed up its maintenance.

Another object of the invention is to propose an element for air purification which is an improvement and/or alternative to the traditional ones.

Another object of the invention is to propose an element for air purification with an alternative characterization, both in constructive and functional terms, with respect to traditional solutions.

Another object of the invention is to propose an element for air purification which can be obtained simply, quickly and with low costs.

Another object of the invention is to propose an element for air purification which can be suitably and easily adapted to the filtration class required in the specific context of use.

Another object of the invention is to propose an element for air purification that can be reused several times.

Another object of the invention is to propose an element for air purification which exploits the potential of innovative products.

Another object of the invention is to propose an element for air purification with a long useful life, while also maintaining its efficiency in removing the contaminants present in the air constantly over time.

Another object of the invention is to provide an element for air purification with high functional standards and at the same time affordable, in order to make it possible to spread it on a large scale.

All these purposes - considered both individually and in any combination thereof - are achieved, according to the invention, with an element for air purification, in particular to be used in an apparatus or system for conditioning, ventilation and/or treatment of the air, with the characteristics indicated in claim 1 and with a method according to claim 12.

The present invention is further clarified hereinafter in some of its preferred embodiments reported for purely illustrative and non-limiting purposes with reference to the attached tables of drawing, in which:
- figure 1: shows from above the support substrate of the air purification element according to the invention
- figure 2: schematically shows the air purification element according to the invention sectioned through its thickness , and
- figure 3: schematically shows the manufacturing process of the air purification element according to the invention.

As can be seen from the figures, the element 1 for air purification, in particular of the type suitable for use in an air conditioning, ventilation and/or air treatment apparatus or system, comprises nano-particles 4 of material based on carbon.

In particular, the element 1 comprises at least one layer 2 which acts as a support layer (substrate) for the nano-particles 4 of carbon-based material.

In particular, the element 1 comprises at least one structure (or matrix) which acts as a support structure (or matrix) for the nano-particles 4 of carbon-based material.

Conveniently, said layer 2 and/or support structure can be made of polymeric and/or natural material. Conveniently, said layer 2 and/or support structure can be made of composite material, for example of glass fibers.

Conveniently, said layer 2 and/or support structure can be made of paper.

Conveniently, said layer 2 and/or support structure can be configured as a fabric/mesh.

Conveniently, said layer 2 and/or support structure can be folded and/or corrugated. Advantageously, said layer 2 and/or support structure can have a configuration folded back on itself at least once, preferably folded like an accordion or pleated.

Conveniently, said layer 2 and/or support structure can be made of paper and/or fabric (with warp and weft structure) of synthetic or natural fibers (for example cotton) and/or can be of non-woven fabric (TNT), in particular of the type defined by twisted and/or pressed fibers.

Advantageously, said layer 2 and/or support structure can be made of felt, preferably needled.

Conveniently, said layer 2 and/or support structure is impregnated with said nano-particles 4 of carbon-based material, preferably in a percentage by weight of 0.1-1% on the weight of the layer 2 and/or of the structure. support.

Conveniently, the element 1 can have a substantially "laminar" configuration, in which the extension of the thickness is much smaller than that of the other two dimensions (length and width). Preferably, the element 1 is flexible.

Preferably, said at least one layer 2 can be made of fabric and the fibers of said fabric are coated at least in part, preferably entirely, by nano-particles 4 of carbon-based material.

Conveniently, the nano-particles 4 of carbon-based material can comprise, and preferably consist of nano-clusters of carbon-based material. Preferably, the nano-clusters of carbon-based material may not comprise graphene, fullerenes or carbon nanotubes.

Conveniently, the nano-particles 4 of carbon-based material can comprise oxidized carbon. In particular, by oxidized carbon here we mean carbon having a positive charge, at least partially. Conveniently, the carbon-based nano-compounds preferably comprise, on the surface, a plurality of functional groups, preferably including oxygen or nitrogen, which increase their solubility and/or modify their chemical and physical properties, for example allowing their grafting (ie the formation of a chemical bond) on the surface of the fibers that form the fabric layer 2. Furthermore, said functional groups can conveniently modify their antioxidant and/or bacteriostatic and/or antimicrobial properties.

In a preferred embodiment, the nano-particles 4 of carbon-based material can comprise nano-clusters of carbon-based material.

Advantageously, nano-clusters of carbon-based material are meant as agglomerates of predefined numbers of carbon atoms having a determined geometric shape, possibly not regular. In particular, for example, said nano-clusters of carbon-based material can comprise a number of atoms and preferably a number of carbon atoms, equal to 38 or equal to 75, or equal to 101. Preferably the atoms can be positioned according to a substantially *fcc* lattice.

Conveniently, the nano-clusters of carbon-based material can have a substantially truncated octahedral or decahedral shape. In particular, if they are composed of 38 atoms, they can have a truncated octahedral shape. In particular, in the case in which they are composed of 75 atoms they can have a decahedral shape, and preferably the shape of a Marks decahedron, and more preferably a Marks decahedron having values of m, n, and p respectively equal to 2, 2 and 2. In particular, if they are composed of 101 atoms, they can have a decahedral shape, and preferably the shape of a Marks decahedron, and more preferably a Marks decahedron having values of *m*, *n*, and *p* respectively equal to 2, 3 and 2. With values of *m*, *n*, and *p* we mean, in the traditional way, the parameters that describe the shape of the decahedron, and, in particular, with *m* we mean the dimension of the horizontal side - ie the one adjacent to the face (111) of the decahedron -, of the face (100) of the decahedron, to the vertical side - ie the one adjacent to another face (100) of the decahedron - of the face (100) of the decahedron, and p is the so-called Mark recess.

Preferably, the nano-clusters of carbon-based material may not comprise a number of atoms, and preferably a number of carbon atoms, equal to 55.

Conveniently, the nano-particles 4 of carbon-based material may comprise, and preferably be made up of a disordered aggregate of nano-clusters of carbon-based material. Advantageously, therefore, the nano-particles 4 of carbon-based material can have a polycrystalline and/or para-crystalline structure.

Preferably, said layer 2 is made of fabric and can comprise a fabric obtained by weaving and/or a fabric obtained by knitting and/or a non-woven fabric (TNT, i.e. with fibers joined together, even in a disordered way, by various systems, e.g. mechanical, hydrodynamic, aerodynamic, etc.). In particular, said fabric layer 2 can comprise natural vegetable, animal or synthetic fibers, or any combination thereof. Conveniently, the layer 2 can comprise at least one area of fabric obtained by weaving threads, and/or an area of fabric obtained by knitting and/or an area of non-woven fabric (TNT). More in detail, the woven layer 2 can be made of cotton fibers, for example of the Supima^{®} type, of silk or linen, or of polyester or nylon.

Conveniently, the element 1 can comprise both a fabric layer 2 and at least two - preferably a plurality of fabric layers 2, superimposed on each other, and preferably joined together by sewing, or by means of adhesives, or by infrared welding or ultrasound. Conveniently, said multiple overlapping and joined layers 2 can be of a different type, ie there can be a layer obtained by weaving threads, and/or a layer obtained by weaving a knit and/or a layer of non-woven fabric (TNT).

Preferably, the fabric layer 2 can have a thickness of about 0.6 - 1.2 mm. Conveniently, the fabric layer 2 can have a weight ranging from a few grams/m² to about 300 grams/m². Conveniently, the fabric layer 2 can have about 10 - 100 threads/cm, preferably about 30 - 60 threads/cm. Advantageously, the fabric layer 2 can have a mesh gap (ie the distance between the threads) of about 0.2 - 1.5 µm.

Conveniently, the nano-particles 4 of carbon-based material can have a negative electric charge.

Conveniently, the nano-particles 4 of carbon-based material can comprise oxidized carbon. In particular, oxidized carbon here means a plurality of carbon-based nano-compounds, which can be substantially zero-dimensional (for example quantum dots), substantially one-dimensional (for example nano-tubes), substantially two-dimensional (for example flakes), or substantially three-dimensional (for example nano-clusters). Conveniently, the carbon-based nano-compounds preferably comprise, on the surface, a plurality of functional groups, preferably including oxygen or nitrogen, which increase their solubility and/or modify their chemical and physical properties, for example allowing their grafting (i.e. the formation of a chemical bond) to the material of the layer 2 or of the support structure/matrix. Furthermore, said functional groups can conveniently modify their antioxidant and/or bacteriostatic and/or antimicrobial properties.

Advantageously, the nano-particles 4 of carbon-based material can be obtained starting from a plurality of carbon-based compounds deriving from natural vegetable compounds. Preferably, said natural vegetable compounds can be endowed with phytotherapeutic properties, preferably antibacterial and/or antiviral.

Conveniently, said nano-particles 4 of carbon-based material can be made with a process such as that illustrated in patent application IT102018000009526, the content of which is incorporated herein by reference.

Preferably, said nano-particles 4 of carbon-based material have the following characteristics:
- dimensions comprised between about 1 and 120 nanometers;
- chemical composition: carbon between about 95 and 99.9%, Hydrogen between about 0.1% and 5%;
- a number of OH hydroxyl groups comprised between 50 and 500;
- a number of carbon nano clusters between about 200 and 25,000.

Preferably, said nano-particles 4 of carbon-based material have a volumetric mass comprised between about 0.002 and about 0.008 g/cm3.

Preferably, said nano-particles 4 of carbon-based material have a contact angle greater than about 90°.

Preferably, said nano-particles 4 of carbon-based material have thermal stability up to about 800°C.

Preferably, said nano-particles 4 of carbon-based material have a zeta potential which is neutral.

Preferably, said nano-particles 4 of carbon-based material are obtained from at least one plant species or a mixture of plant species, preferably with antioxidant and/or antimicrobial characteristics, which is sequentially subjected to:
- subcritical hydrothermal enzymatic carbonization,
- deagglomeration by ultrasonic sonication,
- clustering with high frequency pulsed electromagnetic fields, and
- dehydration.

Conveniently, the particles obtained from the dehydration step have the above characteristics.

Advantageously, the particles obtained from the dehydration step are then subjected to equalization in a hydrophilic and/or lipid solvent matrix by ultrasonic sonication.

Preferably, the plant species or the mixture of plant species, with antioxidant or antimicrobial characteristics, used is/are included in the group consisting of: *Theobroma Cacao, Vitis Vinifera, Olea Europea, Silybum Marianum, Camelia Sinensis, Cynara Scolymus, Curcuma Longa, Piper Nigrum, Allium Sativum, Saccarum Officinarum, Solanum Lycopersicum, Zingiber Officinale Roscoe, Triticum Dicoccum, Raphanus Sativus, Juniperus Cedrus, Pinus Strobus, Artemisia Judaica, Azadirachta Indica, Thujjaumis Dolabrlicata, Solus Annlicata, Cymanus Sinabrlicata, C Lycopersicum, Aristea Ecklonii, Chenopodium Ambrosioides, Diospyros Mespiliformis, Rosmarinum Officinalis, Elephantorrhiza Elephantina, Eucalyptus Camaldulensis, Gunnera Perpensa, Harpephyllum Caffrum, Hypericum Perforatum, Melianthus Comosus, Terminalia Sericolla, C. Caroliniana Willd, Arthrospira platensis, Rosa Chinensis, Coffea Arabica.*

Preferably, during the subcritical hydrothermal enzymatic carbonization step, a plant species with antioxidant and/or antimicrobial properties having a size between 0.1 and 5 mm and a mixture of thermophilic enzymes consisting of chymosin, with a % between 5 and 50%, from pepsin with a % between 10 and 70%, from proteinase with a % between 5 and 30% and from hydrogenase with a % between 5 and 50%, is subjected to a process of "subcritical hydrothermal enzymatic carbonization" in a temperature range between 25°C and 35°C, with a subcritical pressure between 90 and 300 bar, with a humidity % between 15 and 55% and for a period between 20 minutes and 10 hours;

Preferably, during the deagglomeration step by ultrasonication, the plant species with antioxidant and/or antimicrobial properties obtained from the subcritical hydrothermal enzymatic carbonization step is added to a mixture of demineralized water with a % by weight between 10 and 40% , Acetone with a % by weight between 10 and 60%, of Ethanol with a % by weight between 5 and 65% and of Etanoic Acid with a % by weight between 5 and 10% and is subjected to ultrasonication with ultrasounds having a frequency between 20 KHZ and 100 KHz for a duration between 30 minutes and 6 hours.

Preferably, during the clustering phase with high frequency pulsed electromagnetic fields, the mixture obtained from the deagglomeration phase by sonication is subjected to a clustering process by the action of an electromagnetic field with a magnetic induction power between 1000 and 5000 Gauss, an electromagnetic pulsation frequency between 18 and 150 KHz and for a duration between 1 minute and 300 minutes.

Preferably, during the high pressure dehydration phase, the mixture of materials, which was obtained from the clustering phase with high frequency pulsed electromagnetic fields, is subjected to a dehydration process with a temperature between 20°C and 35°C and a pressure between 50 and 100 bar for a duration between 5 and 24 hours.

Advantageously, during the ultrasonication equalization step, the materials obtained from the high pressure dehydration step are equalized by ultrasonication, with a frequency between 10 KHz and 50 KHz for a period between 2 hours and 16 hours, with a base for hydrophilic cosmetic and/or dermocosmetic use having a % by weight between 95 and 99.9% and consisting of demineralized water, with a relative % between 95 and 99.9%, Polyvinylpyrrolidone (PVP), with a relative % between 5 and 90%, from BG (Butylene Glycol) with a relative % between 50 and 80% and from PG (Propylene Glycol) with a relative % between 70 and 95%; or with a base for cosmetic and dermocosmetic use lipophilic having a % by weight between 95 and 99%, consisting of squalene from olive oil with a relative % between 95 and 99%, from Coconut Oil with a relative % between 80 and 99%, from Avocado Oil with a relative % between 85 and 99%, Sweet Almond Oil with a relative % between 70 and 99% and from Butter Cocoa with a relative % between 60 and 99%; or with a base for hydrophilic food supplements having a % by weight between 80 and 99.9%, consisting of demineralized water with a relative % between 80 and 99.9%, apple juice with a relative % between 85 and 99.9%, from pineapple juice with a relative % between 70 and 99%, from mango juice with a relative % between 20 and 40%, from blueberry juice with a relative % between 85 and 99.9%, from pomegranate juice between 80 and 99%, from grape juice with a relative % between 50 and 99% and from tomato juice with a relative % between 80 and 99%; or with a base for lipophilic food supplements having a % by weight between 90 and 99.9%, consisting of Olive Oil with a relative % between 90 and 99.9%, Coconut Oil with a relative % between 70 and 99%, from Avocado Oil with a relative % between 75 and 99%, from Linseed Oil with a % between 90 and 99%, from Rice Oil with a relative % between 75 and 99.9%, from Grapeseed Oil with a relative % between 90 and 99%, from Peanut Oil with a relative % between 80 and 99% , from Wheat Germ Oil with a relative % between 5 and 25%, from Sunflower Oil with a relative % between 5 and 35% and Macadamia Oil with a relative % between 10 and 30%.

In particular, the nano-particles 4 of carbon-based material can be made with the following process. The starting natural plant and/or animal species are subjected to a subcritical hydrothermal carbonization process during which most of the functional groups are removed from the constituent molecules of said plant compounds, in order to leave only the carbonaceous skeletons of the molecules themselves. Preferably, said carbonization process can be carried out in the presence of humidity. Preferably, said carbonization process can take place in the presence of thermophilic enzymes, for example chymosin, pepsin, hydrogenase, or proteinase or other enzymes suitable for the cleavage of chemical bonds.

Advantageously, the product of the carbonization process can be subjected to a deagglomeration step, preferably by sonication. In particular, during the deagglomeration phase the products themselves are subjected to a sonication treatment, preferably by ultrasound, in a bath of solvents, which can be organic or inorganic, polar or apolar. During this deagglomeration phase any agglomerates present in the product, which is obtained from the carbonization process, can be flaked in order to substantially obtain powders of micro and/or nanometric dimensions.

Advantageously, the powders obtained from the deagglomeration phase can then be subjected to an agglomeration/massing phase (i.e. clustering), in particular by irradiation with electromagnetic fields, preferably pulsed, and preferably in the radio-frequency range. In particular, during the agglomeration/massing phase carried out by irradiation, the powders obtained from the deagglomeration phase are aggregated/massed (clustered), thus forming agglomerates, preferably ordered, of micro and/or nanometric dimensions. In particular, the agglomerates thus obtained constitute said nano-particles 4 of carbon-based material.

Advantageously, the agglomerates thus obtained from said agglomeration/massing phase can be subjected to a dehydration phase, in order to remove any traces of solvent which may have remained trapped inside the agglomerates, or which can be chemically bonded or adsorbed outside of the agglomerates themselves.

Advantageously, the agglomerates thus obtained - and preferably dehydrated - can be subjected to an equalization step, preferably by sonication inside a suitable medium and/or solvent, such as for example a mixture of one or more of the following components: water distilled and/or deionized, Polyvinylpyrrolidone, Butylene Glycol, Propylene Glycol, in order to allow a substantially homogeneous distribution of said agglomerates within the medium and/or solvent itself.

Conveniently, the element 1 consists exclusively (i.e. without the addition of further materials or coatings or treatments) of said at least one layer 2 or structure in which said nano-particles 4 of carbon-based material obtained with a process as described above and/or corresponding to the material obtained with the process illustrated in patent application IT102018000009526.

The nano-particles 4 of carbon-based material, in the face of their high surface-volume ratio and their chemical-physical characteristics - such as a volumetric mass of about 0.002 - 0.008 g/cm³, contact angle greater than about 90°, thermal stability up to about 800°C and a zeta potential that is neutral - they have antimicrobial and antiviral properties, and in particular their nanometric surface conformation presents nano-asperities capable of acting as *"diggers"* for the cellular coating of microbes and bacteria.

In particular, advantageously, the nano-particles 4 of carbon-based material have broad spectrum antiviral characteristics against the influenza virus (H1N1), the SARS virus (COV 1) and the COVID19 virus (SARS COV 2) . More in detail, the nano-particles 4 of carbon-based material appear to have inactivated both of the aforementioned viruses by means of structural destruction before viral entry. Conveniently, the antiviral characteristics of the nano-particles 4 of carbon-based material derive from the high number of cellular erosion "sites" present in the whole clustered nanometric structures and from their negative electric charge.

The element 1 is obtained by applying, on said at least one layer 2 (which is preferably in fabric), the nano-particles 4 of carbon-based material by means of a coating process by immersion 3 (ie "*deep coating*" or "*pad*"*)* And, in particular by immersing the layer 2 in a tank 13 containing a solution 14 of said nano-particles 4 of carbon-based material, suitably followed by a subsequent extraction and drying.

More in detail, said process 3 comprises a step of immersion/insertion of the layer 2 into the solution containing said nano-particles 4 of carbon-based material, a step in which the layer 2 remains immersed inside the solution 14 to thus allow the deposit of said particles on the layer, and an extraction step in which the layer 2 is extracted from the solution.

Advantageously, the nano-particles 4 of carbon-based material can be dispersed in a suitable solvent, preferably distilled and/or deionized water, with a concentration of about 0.5 - 5 g/L, preferably of about 1.8 g/L Preferably, therefore, the nano-particles 4 of carbon-based material are dispersed in an aqueous solution 14.

Preferably, the solution 14 for immersion of the layer 2 is prepared as follows: first the nano-particles 4 of carbon-based material are inserted/positioned in the dry and clean immersion tank 13 and, subsequently, said tank is filled with water, preferably at room temperature. Conveniently, the solution 14 thus prepared is mixed and homogenized until the complete dissolution of said particles 4 inside the aqueous solvent.

Preferably, the immersion solution 14 comprises about 0.1-8% (by weight of water) of nano-particles 4 of carbon-based material, about 0.1-0.5% of cross-linker based on bisaminoethylenurea, and the remaining part of water.

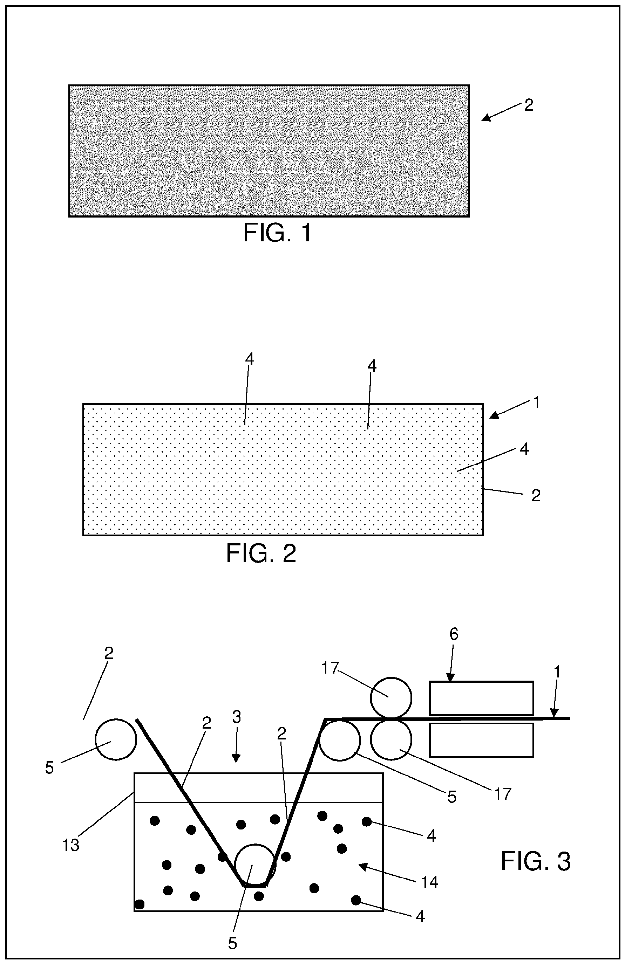

Advantageously, the layer 2 (preferably in fabric and supplied in reels) can be immersed inside the tank 13, containing the nano-particles 4 in aqueous solution 14, for example continuously (*roll-to-roll process*), making it advance by means of rollers 5, as shown in figure 3. Advantageously, the advancement speed of the layer 2 inside the immersion tank 13 can be such that each portion of the layer 2 remains immersed in the solution 14 contained in said tank for a time preferably at least about 10 seconds per linear meter of said layer; for example, the advancement speed of the layer 2 inside the tank 13 can be equal to at least about 0.1m/s.

Conveniently, the layer 2 on which the nano-particles 4 of carbon-based material have been deposited, and leaving the immersion tank 13, then passes inside a drying station 6, preferably configured to cause evaporation of the aqueous solvent. Preferably, the drying station 6 is configured to dry, with hot air (through a tunnel) or by indirect heat, the layer 2 on which the nano-particles 4 of carbon-based material have been applied/deposited, thus obtaining the laminar product 1. Preferably, the drying temperature is about 80-180°C, or in any case it is compatible with the heat resistance of the fabric of the layer 2; suitably, the drying step lasts for the time necessary to cause the complete drying of the layer 2 on which the nano-particles 4 of carbon-based material have been deposited.

Advantageously, upstream of the drying station 6, the passage of the layer 2 - on which the nano-particles 4 of carbon-based material have been deposited, and leaving the immersion tank 13 - can be provided through at least a pair of overlapping squeezing/pressing rollers 17 (preferably three pairs of rollers) configured to remove excess aqueous solution.

Conveniently, by adjusting the rotation speed of the feed rollers 5 and squeezing rollers 17, the excess aqueous solution 14 containing the nano-particles 4 of carbon-based material is recovered from the layer 2 leaving the tank 13.

Advantageously, the element 1 thus obtained can be washed without removing the nano-particles 4 from the layer 2, and thus allowing the product to be reused several times.

Conveniently, moreover, the inclusion in the layer 2 of nano-particles 4 of carbon-based material carries out a bacteriostatic and/or bactericidal action, thus making the element 1 particularly suitable for defining a valid barrier against microorganisms, such as bacteria, as well as dust and particulate matter.

Conveniently, moreover, the element 1 is also resistant to abrasion, resistant to perforation, electrostatic, water-repellent, elastic, thermally insulating and electrically conductive.

Conveniently, element 1 allows the passage of air, in both directions, while filtering/retaining the particulate matter present in the air itself and having dimensions greater than 0.2 - 1.5 µm.

Conveniently, the element 1 allows the passage of air, in both directions, while filtering/retaining the biological and microbiological material present in the air itself and having dimensions from about 150 nm to about 20 µm.

The element 1 for air purification according to the invention can be used as a filtering medium in a device in which the air flow to be filtered passes through the element itself tangentially or radially.

Conveniently, the element 1 for air purification according to the invention can be used as a filter medium in a cartridge filter device.

The element 1 for air purification according to the invention defines a filter medium which has better adsorption characteristics than traditional solutions for a wide range of polar and non-polar, organic and inorganic contaminants.

Advantageously, the element 1 for air purification according to the invention is able to remove from the air:
- heavy metals and metalloids, such as lead, mercury, cadmium and arsenic,
- all volatile organic compounds,
- sulfur compounds, such as sulphates, sulphides, siloxanes and mercaptans,
- volatile radionuclides, such as for example ¹³²Te, ¹³²I, ¹³¹I, ¹³⁴Cs and ¹³⁰Cs.
- other contaminants, such as dioxins, furans, nitrates, ammonia, ozone, odors, particulates (PM) and asbestos.
- air-dispersible biological contaminants based on bacteria, fungi, spores and viruses.

The element 1 for air purification according to the invention combines absorption (by adsorption, absorption and chemisorption) with the membrane separation process by means of a filter bed which acts as a molecular sieve and this thanks to the nanometric configuration of the nano -particles 4 based on carbon and, also, thanks to the molecular interactions of the p-p type and Van der Vaals forces.

Conveniently, the element 1 for air purification according to the invention:
- has a mechanical filtration efficiency greater than 99% for particles up to 0.3 microns in size,
- has an antibacterial and antiviral efficiency greater than 99% for air-dispersible biological organisms smaller than 0.3 microns,
- allows to increase the available filtering surface, and this thanks to the high specific surface of the carbon-based nanoparticles, and thus also increases its exposure to biological substances and chemicals,
- maximizes electrostatic interactions, thanks to molecular interactions of the p-p type and Van der Vaals forces, thus increasing its absorption capacity (which is up to 150 times higher than traditional non-electrical solutions, such as electrofilters),
- can be reused several times (up to thirty times) by washing in hot water at 60°C and/or saturated steam at 121 °C,
- it does not release filtered contaminants thanks to the effective combination of chemical absorption processes, π-π interactions, Van der Vaals forces and nanometric London forces.

The element 1 for air purification thus obtained is particularly advantageous in that:
- is in line with the regulatory requirements for particle filters, in particular with the performance required by filtration classes from G3 to F9 according to CEN EN 779,
- it has antimicrobial and bacteriostatic characteristics at least against the following bacteria: *Staphylococcus aureus, Klebsiella pneumoniae, Escherichia coli* and *Bacillus subtilis;* in particular, the nano-particles 4 of carbon-based material define a bacteriostatic and antiviral surface,
- has virucidal characteristics at least against the following viral strains: SARS (SARS), SARS COV-2 (COVID 19) and influenza A (H1N1),
- prevents the passage of particles smaller than 0.2 - 1.5 microns,
- it has features and performances that are durable and constant over time,
- it can be used in hot and humid environments,
- has a filtering effect in both directions of passage of the air,
- it can be reused several times (even up to about 30 times) as it is washable, for example at 60°C or in a wet steam boiler, and without the use of chemicals, without losing the aforementioned characteristics and performance,
- it has a *shelf life* of about 5 years.

Conveniently, the element 1 according to the invention is intended to be used as a filter medium in an air purification device to be used inside an air conditioning (ie cooling and/or heating) and/or air ventilation system. Preferably, the device provided with the purification element 1 according to the invention can be installed inside a duct of a conditioning and/or ventilation system of the air to be introduced purified in any environment, such as for example a room, a room, building or even the passenger compartment of a vehicle.

Conveniently, the present invention also relates to the use of the nano-particles 4 of at least one carbon-based material - with the characteristics described above - in a filter medium for air purification, preferably to be installed/used in a duct or air passage section.

In particular, unlike what is described in patents US 10 757 988, US 2013/137324 and KR 2013 0011193, the present invention exploits the antibacterial potential of innovative carbon-based materials which have no long-range order and are simpler and cheaper. to realize.

## Claims

1. Element (1) for air purification, in particular to be used in an air conditioning, ventilation and/or, in general, air treatment apparatus or system, **characterized in that** it comprises a layer (2) and/or structure comprising nano-particles (4) comprising at least one nano-cluster, preferably an agglomerate of nano-clusters, of carbon-based material having a face-centered cubic-type structure (*fcc*)*.*

2. Element according to claim 1, **characterized in that** said at least one carbon-based nano-cluster comprises a number of atoms, and preferably a number of carbon atoms, equal to 38 or equal to 75, or equal to 101.

3. Element according to one or more of the preceding claims **characterized in that** said at least one nano-cluster of carbon-based material has a truncated or decahedral octahedral shape, and preferably:
- said nano-clusters comprising 38 carbon atoms have a truncated octahedral shape, and/or
- said nano-clusters comprising 75 carbon atoms have the shape of a Marks decahedron, and more preferably a Marks decahedron with values of m, n, and p respectively equal to 2, 2 and 2, and/or
- said nano-clusters comprising 101 carbon atoms have the shape of a Marks decahedron, and more preferably a Marks decahedron with values of m, n, and p equal to 2, 3 and 2 respectively.

4. Element according to one or more of the preceding claims **characterized in that** said at least one nano-cluster of carbon-based material comprises a number of atoms different from 55.

5. Element according to one or more of the preceding claims **characterized in that** said nano-particles (4) have no long-range order.

6. Element according to one or more of the preceding claims **characterized in that** said layer (2) and/or structure is impregnated with said nano-particles (4) of carbon-based material in a percentage by weight of 0.1-1 %.

7. Element according to one or more of the preceding claims, **characterized in that** said nano-particles (4) of carbon-based material have the following characteristics:
- dimensions comprised between about 1 and 120 nanometers;
- chemical composition with carbon of about 95 - 99.9% and hydrogen of about 0.1% - 5%;
- a number of OH hydroxyl groups comprised between 50 and 500;
- a number of carbon nano-clusters ranging from about 200 to 25,000.

8. Element according to one or more of the preceding claims, **characterized in that** said nano-particles (4) of carbon-based material have the following characteristics:
- volumetric mass between about 0.002 and about 0.008 g/cm³,
- contact angle greater than approx.90°,
- thermal stability up to approx. 800°C,
- neutral zeta potential.

9. Element according to one or more of the preceding claims, **characterized in that** said layer (2) and/or said support structure is made of paper and/or fabric and/or non-woven fabric (TNT).

10. Element according to one or more of the preceding claims **characterized in that** it comprises at least two layers (2) which each comprise said nano-particles of carbon-based material.

11. Element according to one or more of the preceding claims **characterized in that** said support layer (2) is folded like an accordion or pleated.

12. Method for making an element (1) for air purification according to one or more of the preceding claims, **characterized in that** said nano-particles (4) of carbon-based material are applied to the layer (2) and/or to the support structure by means of a *dip coating* process (3).

13. Method according to the preceding claim, **characterized in that** said layer (2) or said support structure is immersed in a solution (14) which comprises:
- about 0.1-8% by weight of water of nano-particles (4) of carbon-based material,
- about 0.1-0.5% by weight of water of bisaminoethylenurea-based crosslinker, and
- the remaining part of water.

14. Method according to claims 12 or 13, **characterized in that** said layer (2) or said support structure is immersed in a solution (14) containing said nano-particles (4) of carbon-based material for a time of about at least ten seconds and from the fact that, following said immersion, said layer (2) or said support structure with applied nano-particles (4) of carbon-based material is dried at a temperature of about 80-180°C.

15. Method according to one or more of claims 12 - 14, **characterized in that** said fabric layer (2) is immersed in a solution (14) in which the nano-particles (4) of carbon-based material are dispersed in a suitable solvent, preferably distilled and/or deionized water, with a concentration of about 0.5 - 5 g/L, preferably about 1.8 g/L.
